# EUROPEAN PATENT APPLICATION

(11) **EP 4 817 870 A1**
(43) Date of publication of application: **07.10.2026**
(21) Application number: 24897923.9
(22) Date of filing: 01.11.2024
(51) Int. Cl.: B32B 15/08, B32B 15/085, B32B 15/20, B32B 7/12, B32B 7/027, C09J 123/12, C09J 11/08, C08L 23/10, C08L 23/04, C08L 23/30

(54) **PACKAGING MATERIAL FOR BATTERY**

(30) Priority: 30.11.2023 KR 20230171592
(71) Applicant: Lotte Chemical Corporation, Seoul 05551 (KR)
(72) Inventor: MOON, Yun A, Daejeon 34110 (KR); CHO, Jin Ju, Daejeon 34110 (KR); OH, Sun Hyung, Daejeon 34110 (KR); CHOI, Byung Doo, Daejeon 34110 (KR); KIM, Yong Bin, Daejeon 34110 (KR); LIM, Ji yoon, Daejeon 34110 (KR)
(74) Representative: Germain Maureau
(86) International application number: PCT/KR2024/017051
(87) International publication number: WO 2025/116326

(57) **Abstract**

Disclosed is a packaging material for a battery, comprising a stacked structure of: an outer layer consisting of a heat-resistant resin film; a barrier layer including metal foil; and an inner layer consisting of a composition including a thermoplastic polyolefin, wherein excellent adhesive strength is imparted to an adhesive layer stacked between the barrier layer and the inner layer, thereby securing stability. The present invention provides a packaging material for a battery, comprising a stacked structure of: an outer layer consisting of a heat-resistant resin film; a barrier layer including metal foil; and an inner layer consisting of a composition including a thermoplastic polyolefin, wherein an adhesive layer is further stacked between the barrier layer and the inner layer, and the adhesive layer includes 30-70 wt% of polypropylene, 5-30 wt% of polyethylene, 20-50 wt% of a propylene-based elastomer, and 1-15 wt% of acid-modified polypropylene.

## Description

### TECHNICAL FIELD

The present invention relates to a packaging material for a battery, and more particularly, to a packaging material for a battery having a structure in which an outer layer, a barrier layer including a metal foil, and an inner layer are laminated.

This application claims the benefit of Korean Patent Application NO. 10-2023-0171592, filed on November 30, 2023, in the Korean Intellectual Property Office, the disclosure of which is incorporated herein in its entirety by reference.

### BACKGROUND ART

A secondary battery is a device that converts external electric energy into chemical energy to store electricity and then converts the chemical energy back into electric energy to supply it when needed, which generally refers to a lithium secondary battery and is used in the fields of portable terminal devices such as a laptop computer, a smartphone, a tablet PC, and a video camera, electric vehicles including a hybrid vehicle, smart grids for storing energy, robots, satellites, etc.

A packaging material used for such secondary battery is an exterior material that stores components inside the battery, and protects a battery cell from external impact, and is an important component material that determines lifetime characteristics of the battery and duration of a battery operation.

A conventionally-used packaging material for a secondary battery includes a cylindrical type (=can type), a prismatic type, and a pouch type, each of which has its advantage and disadvantage. First, the cylindrical type is suitable for mass production due to its standardized size, and has an advantage in terms of cost, but is low in space efficiency when loaded. Second, the prismatic type is efficient in terms of space utilization and is light weighted, compared to the cylindrical type, but has disadvantages of difficult heat management and high production cost, compared to the cylindrical type. The pouch type, which has a different form from the above two packaging materials, has been used due to its advantages of diversification of forms that allows free modification of a battery form, lightweighting, high space utilization, and good packaging efficiency.

A pouch for a secondary battery has a form of a multi-layer structure in which, for example, largely an outer layer, a barrier layer, and an inner layer (heat sealing layer) are included, and a separate adhesive layer is disposed between each of the layers. The inner layer is a layer that serves as a sealant when forming a multi-layer film into a pouch type, which requires thermal adhesion, and thus, the inner layer is a polyolefin-based film layer including poly ethylene (PE), poly propylene (PP), or a copolymer thereof. In addition, for the barrier layer, aluminum that is a metal foil layer is mainly used as a material for providing a moisture and oxygen barrier as well as mechanical strength. In addition, for a film material constituting the outer layer, a functional polymer film is used such as polyethylene terephthalate (PET), poly ethylene naphthalate (PEN), nylon, and a liquid crystal polymer (LCP), which are excellent in pinhole resistance, gas barrier characteristics, heat resistance, mechanical strength, etc.

As above, a cell pouch (pouch-type package material) has the advantages in terms of diverse forms and lightweight, unlike the conventional cylindrical and can types, however, since a soft multi-layer film material is made into a pouch and used as a packaging material, damage may be caused by various factors in various processes. For example, in the process of accommodating an electrode assembly into the pouch, a protruding portion of an electrode tab, an electrode lead, or the like may cause damage on the inner layer of the pouch, such as cracks, and also, due to heat applied during the process of sealing (heat sealing) for preparing into the pouch form, a pinhole may be generated, or cracks may be generated because of the damage on the pouch, and in the case where an aluminum layer is exposed due to the damage, side reaction may be caused by reactivity with an electrolyte solution. The aluminum layer that is exposed to the electrolyte solution as above may corrode due to chemical reaction between oxygen or moisture and the electrolyte solution that has penetrated or dispersed into the battery, thereby generating corrosive gas, which causes a problem of a swelling phenomenon making the inside of the battery swelling. In particular, lithium hexafluorophosphate (LiPF₆) may react with water and oxygen to generate hydrofluoric acid (HF) that is the corrosive gas. This hydrofluoric acid may also react with aluminum to cause a sudden heating reaction, and as a secondary reaction, if the hydrofluoric acid is adsorbed to a surface of aluminum and penetrates the internal structure, fragility of the structure may increase, so that cracks may be generated on a pouch film only with micro-impact, causing leakage of the electrolyte solution, and due to the leakage, lithium and the atmosphere react with each other to cause ignition.

Because of the above factors, for a packaging material for a cell pouch, various properties are being required, such as mechanical flexibility and strength, high barrier characteristics, heat sealing strength, chemical resistance (electrolytic resistance) for an electrolyte solution, electrical insulation, thermal stability, etc.

Currently, Japanese companies hold more than 70% of the global market for cell pouch films, and domestic secondary battery manufacturers are also mostly using the Japanese products. Given the high dependence on foreign materials for a secondary battery, localization of the pouch material is an urgent matter, but in case of the inner layer (heat sealing layer) of the pouch film, particularly, an adhesive between the inner layer (heat sealing layer) and the barrier layer (aluminum layer), it is difficult to conduct researches due to the difficulty of technological development.

### DISCLOSURE OF THE INVENTION

### TECHNICAL PROBLEM

Therefore, the present invention is to provide a packaging material for a battery including a laminated structure of: an outer layer composed of a resin film having heat resistance; a barrier layer including a metal foil; and an inner layer composed of a composition containing thermoplastic polyolefin, wherein excellent adhesive strength is provided to an adhesive layer laminated between the barrier layer and the inner layer, so that stability is secured.

### TECHNICAL SOLUTION

In order to solve the above problem, the present invention provides a packaging material for a battery including a laminated structure of: an outer layer composed of a resin film having heat resistance; a barrier layer including a metal foil; and an inner layer composed of a composition containing thermoplastic polyolefin, wherein a first adhesive layer is further laminated between the barrier layer and the inner layer, and the first adhesive layer contains polypropylene in an amount of 30 to 70 wt%, polyethylene in an amount of 5 to 30 wt%, a propylene-based elastomer in an amount of 20 to 50 wt%, and acid-modified polypropylene in an amount of 1 to 15 wt%.

In addition, the packaging material for a battery, which is characterized by the metal foil including one or more metals selected from the group consisting of aluminum (Al), iron (Fe), copper (Cu), nickel (Ni), tin (Sn), zinc (Zn), indium (In), and tungsten (W), is provided.

In addition, the packaging material for a battery, which is characterized by the acid-modified polypropylene including a maleic anhydride graft in an amount of 0.1 to 10 wt%, is provided.

In addition, the packaging material for a battery, which is characterized by the propylene-based elastomer having a melting point of 140 °C or less, is provided.

In addition, the packaging material for a battery, which is characterized by the propylene-based elastomer, as a propylene-alpha olefin copolymer, including a first propylene-based elastomer containing an ethylene comonomer in an amount of 5 to 25 wt% and a second propylene-based elastomer containing a 1-butene comonomer in an amount of 20 to 40 wt%, is provided.

In addition, the packaging material for a battery, which is characterized by: the outer layer having a thickness of 10 to 40 µm; the barrier layer having a thickness of 25 to 50 µm; the first adhesive layer having a thickness of 25 to 50 µm; and the inner layer having a thickness of 25 to 50 µm, is provided.

In addition, the packaging material for a battery, which is characterized by having an interface peel strength of 8 N/ 15 mm or greater, measured according to a method below, for an aluminum foil and the first adhesive layer before and after immersion in an electrolyte solution, is provided.

[Method for measuring peel strength for interface between aluminum foil and first adhesive layer before immersion in electrolyte solution]

A film, in which PET (12 µm thickness), a second adhesive layer (3 µm thickness), nylon (15 µm thickness), a second adhesive layer (3 µm thickness), an aluminum foil (40 µm thickness), the first adhesive layer (40 µm thickness), and a PP inner layer (40 µm thickness) are laminated, is aged for 1 day under constant temperature and humidity conditions, and then for a sample cut into a piece having a size of 100 mm length and 15 mm width, T-peel strength is measured for an interface between the aluminum foil and the first adhesive layer at 23 °C and at a test speed of 50 mm/min by using a measuring instrument (universal testing machine of Instron);

[Method for measuring interface peel strength for aluminum foil and first adhesive layer after immersion in electrolyte solution]

The laminated film is aged for 1 day under constant temperature and humidity conditions, then a primary sample cut into a size of 150 mm length and 17 mm width is immersed in an electrolyte solution (composition of EC/EMC/DMC=3/3/4 v/v parts) at a temperature of 85 °C for 1 day, and then for a secondary sample cut into a size of 100 mm length and 15 mm width, T-peel strength is measured for the interface between the aluminum foil and the first adhesive layer at a test speed of 50 mm/min and at 23 °C by using a measuring instrument (universal testing machine of Instron).

### ADVANTAGEOUS EFFECTS

Provided is a packaging material for a battery according to the present invention, including a laminated structure of: an outer layer composed of a resin film having heat resistance; a barrier layer including a metal foil; and an inner layer composed of a composition containing thermoplastic polyolefin, wherein an adhesive layer laminated between the barrier layer and the inner layer includes a polypropylene-based resin which contains polyethylene, a propylene-based elastomer, and acid-modified polypropylene in a particular composition, so that adhesive strength may be improved and stability may be secured, and furthermore, moldability may be improved in post-processing at the same time.

### MODE FOR CARRYING OUT THE INVENTION

Hereinafter, the present invention is described in detail through a preferred embodiment. Before getting to the point, it will be understood that terms or words used in the specification and claims shall not be construed as being limited to having the meaning defined in commonly used dictionaries, and it will be further understood that the terms or words should be interpreted as having the meanings that are consistent with their meanings in the context of the relevant art and the technical idea of the invention, based on the principle that an inventor may properly define the meaning of the terms or words to best explain the invention. Thus, configurations of embodiments described in this specification are merely the most preferred embodiments of the present invention and do not represent all technical ideas of the present invention, therefore, it should be understood that various equivalents and modifications that can replace them may exist at the time of filing this application.

According to the present invention, disclosed is a packaging material for a battery, as a packaging material for a lithium battery, including a laminated structure of: an outer layer composed of a resin film having heat resistance; a barrier layer including a metal foil; and an inner layer composed of a composition containing thermoplastic polyolefin, wherein a first adhesive layer is further laminated between the barrier layer and the inner layer, and the first adhesive layer contains polypropylene in an amount of 30 to 70 wt%, polyethylene in an amount of 5 to 30 wt%, a propylene-based elastomer in an amount of 20 to 50 wt%, and acid-modified polypropylene in an amount of 1 to 15 wt%.

The outer layer is the outermost layer of the packaging material for a lithium battery that is provided on the barrier layer including a metal foil and may thus be exposed to the outside, and it is desirable that the outer layer is formed using a material having heat resistance, freezing resistance, pinhole resistance, insulation, chemical resistance, moldability, etc., as well as having wear resistance for protecting the barrier layer including a metal foil. The outer layer composed of the resin film having heat resistance may include a polyamide-based resin or a polyester-based resin. The polyamide-based resin may be nylon which is advantageous for molding due to its high elongation, and the polyester-based resin may be polybuthylene terephthalate (PBT) or polyethylene terephthalate (PET) capable of providing high chemical resistance, pinhole resistance, insulation, mechanical strength, etc.

The outer layer may have a thickness of about 10 to 40 µm in consideration of all of sufficient wear resistance, heat resistance, pinhole resistance, chemical resistance, moldability, insulation, etc. If the thickness of the outer layer is too small, strength of the outer layer is not sufficient, so that moldability of the packaging material for a battery may be reduced. On the other hand, if the thickness is too large, the inner layer and the barrier layer including a metal foil, which are provided under the outer layer, need to be provided in relatively small thicknesses, so that there may be problems of reduction in thermal adhesive strength, reduction in interlayer peel strength, etc. in the packaging material for a battery. However, the thickness of the outer layer is not limited to the above range, and the outer layer may have an appropriate thickness according to use of a cell pouch to be created, for example, a thin-film cell pouch to be created with a total thickness of about 88 µm, a general cell pouch to be created with a total thickness of about 113 µm, or a medium and large-sized cell pouch to be created with a total thickness of about 153 µm.

The barrier layer including a metal foil is for blocking moisture or air from the outside and access of gas generated inside, which may be in contact with the inner layer with the first adhesive layer as a medium. The barrier layer including a metal foil may include a metal having gas barrier and moisture barrier characteristics, and for example, may include one or more (single metal or mixture of single metals) selected from the group consisting of aluminum (Al), iron (Fe), copper (Cu), nickel (Ni), tin (Sn), zinc (Zn), indium (In), tungsten (W), etc., an alloy of two or more selected therefrom, or the like. As a preferred embodiment, the barrier layer including a metal foil may include aluminum (Al) or Al alloy in consideration of all of the moisture barrier characteristics, gas barrier characteristics, and moldability. The barrier layer including a metal foil may have a thickness of about 25 to 50 µm for having sufficient gas barrier characteristics and moisture barrier characteristics. However, the thickness of the barrier layer including a metal foil is not limited to thereto, and the barrier layer may have an appropriate thickness according to use of a cell pouch to be created, that is, generally a thin-film cell pouch to be created with a total thickness of about 88 µm, a general cell pouch to be created with a total thickness of about 113 µm, or a medium and large-sized cell pouch to be created with a total thickness of about 153 µm.

It is desirable that the barrier layer including a metal foil has at least one surface, preferably at least a surface on the inner layer side, and preferably both surfaces being applied with a conversion coating in order to achieve stabilization of adhesion, prevent dissolution or corrosion, etc. Here, the conversion coating is a treatment for forming an acid-resistant film on a surface of the barrier layer including a metal foil. For example, the conversion coating may include: a chromic acid chromate treatment using a chromic acid compound such as chromium nitrate, chromium fluoride, chromium sulfate, chromium acetate, chromium oxalate, chromium pyrophosphate, chromium acetylacetonate, chromium chloride, and chromium potassium sulfate; a phosphate chromate treatment using a phosphate compound such as sodium phosphate, potassium phosphate, ammonium phosphate, and polyphosphate; a chromate treatment using an aminated phenol polymer, etc.

The inner layer is a layer corresponding to the innermost side of the packaging material for a battery, and composed of a composition containing thermoplastic polyolefin, which is in contact with an electrolyte solution of a battery, and to which heat sealing is performed on the purpose of sealing the battery.

That is, since heat-sealing characteristics are required for the inner layer as a layer that serves as a sealant in preparing a multi-layer film into a pouch type, the inner layer may include polyolefin such as poly ethylene (PE) and poly propylene (PP), or a copolymer thereof.

For sufficient heat-sealing characteristics, the inner layer may have a thickness of about 25 to 50 µm, but the thickness is not limited thereto, and the inner layer may have an appropriate thickness according to use of a cell pouch to be created, for example a thin-film cell pouch to be created with a total thickness of about 88 µm, a general cell pouch to be created with a total thickness of about 113 µm, or a medium and large-sized cell pouch to be created with a total thickness of about 153 µm.

In the pouch type, as a packaging material for a secondary battery, a soft material pouch is used as a container, and this, the pouch may be damaged for various reasons in various processes. Therefore, in the present invention, in order to provide excellent adhesive strength to the first adhesive layer, laminated between the barrier layer and the inner layer, so as to provide a packaging material for a battery with stability being secured, the first adhesive layer includes a polypropylene-based resin, in which polyethylene, a propylene-based elastomer, and acid-modified polypropylene are included in a particular composition.

The type of polypropylene that is a base resin in the first adhesive layer is not particularly limited, and for example, a propylene homopolymer, a propylene-based binary copolymer, a propylene-based ternary copolymer, a propylene block copolymer, etc. may be used, preferably a copolymer of propylene and ethylene or one α-olefin other than propylene may be used, and more preferably, a ternary copolymer of propylene, ethylene, and 1-butene may be used. At this time, when the preferred propylene-based ternary copolymer is applied, the amount of ethylene and the amount of 1-butene may be 2 to 4 wt% and 2.5 to 4.5 wt%, respectively.

In the first adhesive layer, polypropylene may be included in an amount of 30 to 70 wt%, preferably 35 to 65 wt%, and more preferably 40 to 60 wt%. When the amount of the polypropylene is less than 30 wt%, molding is difficult during preparation of a film, and adhesion with the barrier layer including a metal foil is reduced, and when the amount is greater than 70 wt%, the adhesion with the barrier layer including a metal foil is reduced.

In addition, polyethylene in the first adhesive layer plays a role in complementing a neck-in phenomenon that occurs during extrusion molding.

Considering compatibility and processibility of a component constituting the first adhesive layer, the polyethylene, having a density of 0.900 to 0.940 g/cm³ and preferably 0.910 to 0.930 g/cm³, and having a melt index (190 °C and 2.16 kg load) of 5 to 20 g/10 min, and preferably 10 to 15 g/10 min, may be used.

In the first adhesive layer, polyethylene may be included in an amount of 5 to 30 wt%, preferably 5 to 25 wt%, and more preferably 10 to 20 wt%. When the amount of polyethylene is less than 5 wt%, a neck-in phenomenon occurs excessively during extrusion molding, and when the amount is greater than 30 wt%, the adhesion with the barrier layer including a metal foil is reduced.

The acid-modified polypropylene, in the first adhesive layer, is a resin that is added in order to increase adhesive strength between the barrier layer including a metal foil and the inner layer through providing a polar group.

The acid-modified polypropylene may be a modified polypropylene in which maleic anhydride that is a polar functional group is grafted in an amount of 0.1 to 10 wt%, and preferably 2 to 5 wt%. When the grafted amount of maleic anhydride in the modified polypropylene is less than 0.1 wt%, adhesive strength to the barrier layer including a metal foil may be reduced, and when the amount is greater than 10 wt%, due to large amounts of polar functional groups, a fish eye may occur, and oligomers are generated, so that surface tension decreases after a corona surface treatment, and thus the adhesive strength to the barrier layer may be reduced.

In the first adhesive layer, the acid-modified polypropylene may be included in an amount of 1 to 15 wt%, preferably 2 to 10 wt%, and more preferably 3 to 7 wt%. When the amount of the acid-modified polypropylene is less than 1 wt%, improvement in adhesive strength to the barrier layer may not be satisfactory, and when greater than 15 wt%, the adhesive strength to the barrier layer may be reduced also due to the large amounts of polar functional groups.

In addition, the first adhesive layer includes a propylene-based elastomer in order to strengthen soft characteristics of a pouch made of a multi-layer film material, and to further improve adhesive strength between the barrier layer including a metal foil and the inner layer. Here, using of an ethylene-based elastomer as an elastomer may be considered, but it was confirmed that when the propylene-based elastomer was used in combination with other components constituting the first adhesive layer, the adhesive strength was significantly improved, compared to when the ethylene-based elastomer was used.

At this time, for the propylene-based elastomer, in production of the packaging material through a process of laminating the outer layer, the barrier layer, and the inner layer, it is preferred to use a propylene-based elastomer having a melting point of 140 °C or less, more preferably, 60 to 140 °C, and further more preferably 70 to 110 °C in order to increase productivity by enabling the adhesive strength to develop at low temperature.

In addition, the propylene-based elastomer may be used alone, or as a mixture of two or more types, and in the present invention, it was confirmed that as a propylene-alpha olefin copolymer of two types in a particular composition, in case that a mixture of a first propylene-based elastomer containing an ethylene comonomer in an amount of 5 to 25 wt%, and preferably 10 to 20 wt% and a second propylene-based elastomer containing a 1-butene comonomer in an amount of 25 to 35 wt% was used, the adhesive strength was maximized. At this time, the first propylene-based elastomer may have a density of 0.84 to 0.88 g/cm³, and the second propylene-based elastomer may have a density of 0.88 to 0.92 g/cm³. In addition, the most preferred melting point of the first propylene-based elastomer is 100 to 110 °C, and the most preferred melting point of the second propylene-based elastomer is 70 to 80 °C.

In the first adhesive layer, the propylene-based elastomer may be included in an amount of 20 to 50 wt%, preferably 20 to 45 wt%, and more preferably 25 to 45 wt%. When the amount of the propylene-based elastomer is less than 20 wt%, effects of providing soft characteristics of the packaging material and improvement in adhesion with the barrier layer are insignificant, and when greater than 50 wt%, molding is difficult during preparation of a film, and improvement in adhesion with the barrier layer including a metal foil is insignificant. In addition, in case of using the mixture of the first propylene-based elastomer and the second propylene-based elastomer, each may be used preferably in the amount of 10 to 25 wt%, and more preferably in the amount of 15 to 20 wt%.

For sufficient improvement in adhesive strength together with providing of soft characteristics of the packaging material, the first adhesive layer may have a thickness of about 25 µm to 50 µm, but the thickness is not limited thereto, and the first adhesive layer may have an appropriate thickness according to use of a cell pouch to be created, for example, a thin-film cell pouch to be created with a total thickness of about 88 µm, a general cell pouch to be create with a total thickness of about 113 µm, or a medium and large-sized cell pouch to be create with a total thickness of about 153 µm.

Meanwhile, in the present invention, a second adhesive layer may be further formed in order to bond the outer layer and the barrier layer including a metal foil. At this time, in case that the outer layer is composed of multiple layers, the second adhesive layer may also be disposed between the outer layers.

The second adhesive layer may be formed by an adhesive capable of bonding the outer layer and the barrier layer including a metal foil, and the adhesive used for the forming of the second adhesive layer may be a 2-component curing adhesive, and may also be a 1-component curing adhesive. In addition, an adhesion instrument for the adhesive used in the forming of the second adhesive layer is not particularly limited, and any one selected from a chemical-reaction type, a solvent volatile type, a hot melt type, a hot press type, etc. may be used.

A resin component of the adhesive that can be used in the forming of the second adhesive layer may include: for example, a polyester-based resin such as polyethylene terephthalate, polybutylene terephthalate, polyethylene naphthalate, polybutylene naphthalate, polyethylene isophthalate, polycarbonate, and a polyester copolymer; a polyether-based adhesive; a polyurethane-based adhesive; an epoxy-based resin; a phenol resin-based resin; a polyamide-based resin such as nylon 6, nylon 66, nylon 12, and a polyamide copolymer; a polyolefin-based resin such as polyolefin, acid-modified polyolefin, and metal-modified polyolefin; a polyvinyl acetate-based resin; a cellulose-based adhesive; a (meth)acrylate-based resin; a polyimide-based resin; an amino resin such as a urea resin and a melamine resin; a rubber such as a chloroprene rubber, a nitrile rubber, and a styrenebutadiene rubber; a silicone-based resin; an fluorinated ethylene propylene copolymer, and the like. These adhesive components may be used alone, or may also be used in combination of two or more thereof.

The second adhesive layer may have a thickness of, for example, 2 to 10 µm.

A method for manufacturing a packaging material for a battery according to the present invention is not particularly limited as long as it can achieve a laminate in which layers in a predetermined composition are each laminated, but the following method is exemplified.

First, a laminate (laminate A), in which the outer layer, the second adhesive layer, and the barrier layer including a metal foil are laminated in sequence, is formed. Particularly, the forming of the laminate A may be performed by a dry lamination method in which the adhesive, used in the forming of the second adhesive layer, is applied on the barrier layer including a metal foil, whose surface is applied with conversion-coating, in an application method such as extrusion, gravure coating, and roll-coating, and dried, and then the outer layer is laminated to cure the second adhesive layer.

Thereafter, the inner layer is laminated on the barrier layer including a metal foil of the laminate A. At this time, for the first adhesive layer, disposed between the barrier layer including a metal foil and the inner layer, for example, a lamination method (coextrusion lamination method), in which the first adhesive layer and the inner layer are coextruded on the barrier layer including a metal foil of the laminate A, may be used.

As described above, the packaging material for a battery according to the present invention includes a polypropylene-based resin for the first adhesive layer laminated between the barrier layer and the inner layer, wherein polyethylene, a propylene-based elastomer, and acid-modified polypropylene are included in a particular composition, so that the adhesive strength may be improved, and stability may be secured, and particularly, the packaging material for a battery according to the present invention may have a peel strength of 8 N/15 mm or greater, and preferably 11 N/15 mm or greater for an interface between an aluminum foil and the first adhesive layer, measured according to the following method, before and after immersion in an electrolyte solution.

[Method for measuring peel strength for interface between aluminum foil and first adhesive layer before immersion in electrolyte solution]

A film, in which PET (thickness of 12 µm), a second adhesive layer (thickness of 3 µm), nylon (thickness of 15 µm), a second adhesive layer (thickness of 3 µm), an aluminum foil (thickness of 40 µm), the first adhesive layer (thickness of 40 µm), and a PP inner layer (thickness of 40 µm) are laminated, is aged for 1 day under constant temperature and humidity conditions, and then for a sample cut into a piece having a size of 100 mm length and 15 mm width, using a measuring instrument (universal testing machine of Instron), T- peel strength is measured for an interface between the aluminum foil and the first adhesive layer at a test speed of 50 mm/min and at 23 °C.

### [Method for measuring peel strength for interface between aluminum foil and first adhesive layer after immersion in electrolyte solution]

The laminated film is aged for 1 day under constant temperature and humidity conditions, then a primary sample cut into a piece having a size of 150 mm length and 17 mm width is immersed in an electrolyte solution (composition of EC/EMC/DMC=3/3/4 v/v parts) at a temperature of 85 °C for 1 day, and then for a secondary sample cut into a piece having a size of 100 mm length and 15 mm width, using a measuring instrument (universal testing machine of Instron), T-peel strength is measured for the interface between the aluminum foil and the first adhesive layer at a test speed of 50 mm/min and at 23 °C.

Hereinafter, the present invention is described in more detail through particular examples and comparative examples.

### Example and Comparative Example

By using a first adhesive layer resin in a composition listed in Table 1 below, a sample was prepared and the property was measured according to the following method, and the result was shown in Table 1 below.
(1) Simplified Peel strength test
   Under a condition of 130 and 160 °C, using a pressing device, a sample of an aluminum sheet (thickness of 1 mm) / a first adhesive resin (thickness of 150 µm) / an aluminum sheet (thickness of 1 mm) was prepared, and then for the sample cut into a piece having a size of 100 mm length and 15 mm width, the T-peel strength for an interface between aluminum and the first adhesive layer was measured at 23 °C and at a test speed of 200 mm/min by using a measuring instrument (universal testing machine of Instron).
(2) Method for measuring peel strength for interface between aluminum foil and first adhesive layer before immersion in electrolyte solution
   In the condition where the temperature at a pressing roll portion at the rear end of a coextrusion instrument was set to 140 °C and 160 °C, a film, in which PET (thickness of 12 µm), a second adhesive layer (thickness of 3 µm), nylon (thickness of 15 µm), a second adhesive layer (thickness of 3 µm), an aluminum foil (thickness of 40 µm), the first adhesive layer (thickness of 40 µm), and a PP inner layer (thickness of 40 µm) were laminated, was aged for 1 day under constant temperature and humidity conditions, and then for a sample cut into a piece having a size of 100 mm length and 15 mm width, T-peel strength was measured for the interface between the aluminum foil and the first adhesive layer at 23 °C and at a test speed of 50 mm/min by using a measuring instrument (universal testing machine of Instron).
(3) Method for measuring peel strength for interface between aluminum foil and first adhesive layer after immersion in electrolyte solution

In the condition where the temperature at a pressing roll portion at the rear end of a coextrusion instrument was set to 160 °C, a film, in which PET (thickness of 12 µm), a second adhesive layer (thickness of 3 µm), nylon (thickness of 15 µm), a second adhesive layer (thickness of 3 µm), an aluminum foil (thickness of 40 µm), the first adhesive layer (thickness of 40 µm), and a PP inner layer (thickness of 40 µm) were laminated, was aged for 1 day under constant temperature and humidity conditions, and then for a primary sample cut into a piece having a size of 150 mm length and 17 mm width was immersed in an electrolyte solution (composition of EC/EMC/DMC=3/3/4 v/v parts) at a temperature of 85 °C for 1 day, and then for a secondary sample cut into a piece having a size of 100 mm length and 15 mm width, T-peel strength was measured for the interface between the aluminum foil and the first adhesive layer at a test speed of 50 mm/min and at 23 °C by using a measuring instrument (universal testing machine of Instron). Here, EC is ethylene carbonate, EMC is ethylmethyl carbonate, and DMC is dimethyl carbonate.

**[Table 1]**

| Classification | | | Example1 | Example2 | Example3 | Example4 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|---|---|---|---|---|---|
| Adhesive layer composition | PP | | 50 | 40 | 60 | 60 | 80 | 80 | 80 | 80 | 80 | 75 | 70 | 64 | 20 | 59 | 45 |
| | PE | | 15 | 15 | 15 | 15 | - | - | - | 15 | 15 | 15 | 15 | 15 | 15 | 15 | 15 |
| | POE-1 | | 15 | 20 | 20 | - | 20 | - | - | 5 | - | - | 5 | 8 | 30 | 8 | 10 |
| | POE-2 | | 15 | 20 | - | 20 | - | 20 | - | - | 5 | 5 | 5 | 8 | 30 | 8 | 10 |
| | POE-3 | | - | - | - | - | - | - | 20 | - | - | - | - | - | - | | - |
| | MAH-g-PP | | 5 | 5 | 5 | 5 | - | - | - | - | - | 5 | 5 | 5 | 5 | 10 | 20 |
| Simple peel strength (N/15m m) | 130°C | | 70 | 73 | 72 | 68 | 5 | 7 | Peeled | 5 | 3 | 23 | 33 | 47 | 20 | 20 | 17 |
| | 160°C | | 94 | 95 | 88 | 95 | 20 | 35 | 7 | 10 | 12 | 29 | 38 | 50 | 23 | 43 | 40 |
| Peel strength | Befor | 140 °C | 9.2 | 9.4 | 8.8 | 8.2 | Peeled | Peeled | Peeled | Peeled | Peeled | 2.1 | 3.8 | 4.6 | Peeled | Peeled | Peeled |
| (N/15m m) | e electrolyte solution immersion | 160 °C | 12.3 | 12.2 | 11.8 | 12 | 2 | 2 | Peeled | Peeled | Peeled | 3.9 | 7.6 | 8.5 | 2.3 | Peeled | Peeled |
| | After electrolyte solution immersion | 160 °C | 12 | 11.4 | 11 | 12.1 | Peeled | Peeled | - | - | - | Peeled | 5.4 | 7.5 | Peeled | - | - |
| * Note | | | | | | | | | | | | | | | | | |
| - PP : propylene ternary copolymer (amount of ethylene 2~4 wt%, amount of 1-butene 2.5~4.5 wt% | | | | | | | | | | | | | | | | | |
| - PE : polyethylene (density 0.918 g/cm³, melt index (190°C, 2.16 kg load) 12 g/10min) | | | | | | | | | | | | | | | | | |
| - POE-1 : polypropylene elastomer (density 0.862 g/cm³, amount of ethylene 16 wt%, melting point 104 °C) | | | | | | | | | | | | | | | | | |
| - POE-2 : polypropylene elastomer (density 0.89~91 g/cm³, amount of 1-butene 30 wt%, melting point 79 °C) | | | | | | | | | | | | | | | | | |
| - POE-3 : polyethylene elastomer (density 0.885 g/cm³, amount of 1- butene 20 wt%) | | | | | | | | | | | | | | | | | |
| - MAH-g-PP : maleic anhydride modified polypropylene (amount of maleic anhydride graft 4 wt%) | | | | | | | | | | | | | | | | | |

Referring to Table 1, in case that a polypropylene-based resin was included for the first adhesive layer laminated between the barrier layer and the inner layer, according to the present invention, and polyethylene, a propylene-based elastomer, and acid-modified polypropylene were included in a particular composition (Examples 1 to 4), it can be seen that interface adhesive strength between the barrier layer and the first adhesive layer was significantly improved, and it can be seen that such effect was maximized when the propylene-based elastomer, among the components constituting the first adhesive layer, was included in a particular mixed composition (Examples 1 and 2).

In this regard, in case that polyethylene and acid-modified polypropylene were not used, or the ethylene-based elastomer was used (Comparative Examples 1 to 3), in case that the amount of propylene-based elastomer did not reach a certain level (Comparative Examples 6 to 8 and 10), or the amount of propylene-based elastomer did not reach a certain level and the acid-modified polypropylene was not used (Comparative Examples 4 and 5), in case that the amount of propylene-based elastomer was excessive (Comparative Example 9), and in case that the amount of acid-modified polypropylene was excessive (Comparative Example 11), it can be seen that in all cases, peeling occurred on the interface between the barrier layer and first adhesive layer or the interface adhesive strength was significantly lower than those of the examples.

The preferred embodiment of the present invention was described in detail above. The description of the present invention is for illustrative purposes only, and those skilled in the art to which the present invention pertains will understand that the present invention can be easily modified into other specific forms without changing the technical concept or essential features of the present invention.

Therefore, the scope of the present invention is defined by the claims set forth below rather than by the detailed description above, and all modifications or variations derived from the meaning, scope, and equivalent concepts of the claims should be deemed to be included within the scope of the present invention.

## Claims

1. A packaging material for a battery comprising a laminated structure of: an outer layer composed of a resin film having heat resistance; a barrier layer comprising a metal foil; and an inner layer composed of a composition comprising thermoplastic polyolefin,
wherein a first adhesive layer is further laminated between the barrier layer and the inner layer, and
the first adhesive layer comprises polypropylene in an amount of 30 to 70 wt%, polyethylene in an amount of 5 to 30 wt%, a propylene-based elastomer in an amount of 20 to 50 wt%, and acid-modified polypropylene in an amount of 1 to 15 wt%.

2. The packaging material for a battery of claim 1, wherein the metal foil comprises one or more metals selected from the group consisting of aluminum (Al), iron (Fe), copper (Cu), nickel (Ni), tin (Sn), zinc (Zn), indium (In), and tungsten (W).

3. The packaging material for a battery of claim 1, wherein the acid-modified polypropylene comprises a maleic anhydride graft in an amount of 0.1 to 10 wt%.

4. The packaging material for a battery of claim 1, wherein the propylene-based elastomer has a melting point of 140 °C or less.

5. The packaging material for a battery of claim 1, wherein the propylene-based elastomer, as a propylene-alpha olefin copolymer, comprises a first propylene-based elastomer comprising an ethylene comonomer in an amount of 5 to 25 wt% and a second propylene-based elastomer comprising a 1-butene comonomer in an amount of 20 to 40 wt%.

6. The packaging material for a battery of claim 1, wherein: the outer layer has a thickness of 10 to 40 µm; the barrier layer has a thickness of 25 to 50 µm; the first adhesive layer has a thickness of 25 to 50 µm; and the inner layer has a thickness of 25 to 50 µm.

7. The packaging material for a battery of claim 1, wherein the packaging material has an interface peel strength of 8 N/ 15 mm or greater, measured according to a method below, for an aluminum foil and the first adhesive layer before and after immersion in an electrolyte solution:
[Method for measuring peel strength for interface between aluminum foil and first adhesive layer before immersion in electrolyte solution]
A film, in which PET (12 µm thickness), a second adhesive layer (3 µm thickness), nylon (15 µm thickness), a second adhesive layer (3 µm thickness), an aluminum foil (40 µm thickness), the first adhesive layer (40 µm thickness), and a PP inner layer (40 µm thickness) are laminated, is aged for 1 day under constant temperature and humidity conditions, and then for a sample cut into a piece having a size of 100 mm length and 15 mm width, T-peel strength is measured for an interface between the aluminum foil and the first adhesive layer at 23 °C and at a test speed of 50 mm/min by using a measuring instrument (universal testing machine of Instron);
[Method for measuring peel strength for interface between aluminum foil and first adhesive layer after immersion in electrolyte solution]
The laminated film is aged for 1 day under constant temperature and humidity conditions, then a primary sample, cut into a piece having a size of 150 mm length and 17 mm width, is immersed in an electrolyte solution (composition of EC/EMC/DMC=3/3/4 v/v parts) at a temperature of 85 °C for 1 day, and then for a secondary sample cut into a piece having a size of 100 mm length and 15 mm width, T-peel strength is measured for the interface between the aluminum foil and the first adhesive layer at 23 °C and at a test speed of 50 mm/min by using a measuring instrument (universal testing machine of Instron).
